# EUROPEAN PATENT SPECIFICATION

(11) **EP 1 569 380 B1**
(45) Date of publication and mention of the grant of the patent: **18.06.2008**
(21) Application number: 05101167.4
(22) Date of filing: 16.02.2005
(51) Int. Cl.: H04L 9/18

(54) **System for achieving anonymous communication of messages using secret key crytptography**
System zum Erreichen einer anonymen Kommunikation einer Nachricht unter Verwendung einer Geheimschlüsselkryptographie
Système pour réaliser une communication anonyme de messages en utilisant une cryptographie à clé secrête

(30) Priority: 27.02.2004 EP 04368014
(43) Date of publication of application: 31.08.2005
(73) Proprietor: International Business Machines Corporation, Armonk, NY 10504 (US)
(72) Inventor: Van Acker, Bernard, B-2140 Borgerhout (BE); Seliger, Frank, D-71157 Hildrizhausen (DE); Marino, Anna, 83100 Avellino (IT)
(74) Representative: Bell, Mark

(56) References cited:
- DOLEV S ET AL: "XOR-TREES FOR EFFICIENT ANONYMOUS MULTICAST AND RECEPTION" ACM TRANSACTIONS ON INFORMATION AND SYSTEM SECURITY, ACM, NEW YORK, NY, US, vol. 3, no. 2, May 2000 (2000-05), pages 63-84, XP001063774 ISSN: 1094-9224

## Description

### Technical field

The invention relates to the data transmission systems wherein a number of senders communicate messages to a recipient and wherein the messages are secret and anonymous, and in particular relates to a system for achieving anonymous communication of messages using secret key cryptography.

### Background

Currently proposed secret communication systems are secured either by secret-key (also called symmetric key) cyphers or by public key (also called asymmetric) encryption, or, more often, by a combination of those two. On one hand, public key cryptography allows public keys to be distributed and even published while limiting the decryption (and signing) possibilities to the owner of the private key only. On the other hand secret key communication is computationally much more efficient. Also, a specific type of secret key cryptography, known as one time pad, is unconditionally secure (from the cryptographic point of view) provided only the key remains secret.

The two schemes above ensure the confidentiality of the messages. However in some situations, like elections systems or anonymous payment systems, not only the contents of the communication should be secured, but also the identity of each participant. For example, it should be possible for the recipient of a message to be the only one (apart from the sender) to decrypt a message, while it remains impossible for him to know who has sent that message.

The general problem is the difficulty to separate knowledge about the sender from the contents of the message itself, that is to make the message anonymous to the recipient and, at the same time, secret to an intermediate party.

In a traditional case of symmetric encryption, a key is distributed securely to the other participant and both participants keep a copy of the same key. The sender encrypts the message with the key and sends the encrypted message to the recipient. This one then decrypts the message with the key. In this scheme, the major problem is that the recipient knows who is the sender of the message. Thus, if the message is a vote, the vote would not be secret for the recipient because the latter has a sufficient knowledge to make the link between the voter and his/her vote.

Therefore, it is necessary to have intermediate agents. Such a system based on public key cryptography is described in the article by David Chaum "Untraceable electronic Mail, Return Addresses, and Digital Pseudonyms" Comm ACM 24, 2, Feb. 1981, 84-88, wherein the author proposes to divide the recipients into different agents. For example, with two agents, the sender transmits his encrypted message encrypted with a series of public keys to agent 1, who decrypts it with *his* private key only, and in turn sends the result to agent 2 without telling the latter the identity of the sender.

The same strategy can be extended to many agents. That system will achieve anonymity insofar not all agents collude, because intermediate agents can only pass on public keys to the sender, without being able to decrypt the messages. But this system has also the typical limitations of public key encryption, being:
- it lacks an unconditionally secure protocol (for elections this will be an argument)
- it is computationally demanding
- as such, it does not prevent vote buying, since one can prove his vote.
- it cannot be performed by humans only, in other words it imposes the use of electronic devices in all circumstances.

Conversely, if secret keys are used, the problem of giving the sender keys such that the recipient does not know the identity of the sender but can decrypt the message while intermediate agents cannot, still remains. Thus, with two agents, a first agent gives a key to a second agent and then, this one adds a key of his own and forward the key to the user. The user then encrypts his vote twice, one with the key of the first agent and re-encrypts the result with the key of the second agent and finally sends the message encrypted twice to the second agent. Now, since the second agent has sent both keys, he is able to decrypt the result with these two keys and hence, make the link between the contents and the sender. This is a major problem for secret key encryption and voting except when confidentiality can be ensured by other than cryptographic means.

In order to avoid the above problem, both agents could send their respective keys to the user separately. The sender would encrypt his/her message with both keys, and send the encrypted message first to the first agent who would then decrypt it with his key, and then forward the partially decrypted message to the second agent who would then decrypt and read the message. Unfortunately, the problem of privacy has not been solved yet, but simply moved to the second agent who knows both the message (he decrypted it) and its sender (he had distributed his key to him/her before).

Publication entitled "XOR-TREES FOR EFFICIENT ANONYMOUS MULTICAST AND RECEPTION" Dolev S et al., ACM Transactions on Information and System Security, ACM, New York, NY, US, vol.3, no.2, May 2000, pages 63-84, XP001063774 ISSN: 1094-9224, examines the problem of efficient anonymous multicast and reception in general communication networks. This publication presents algorithms that achieve anonymous communication, are protected against traffic analysis, and require O(1) amortized communication complexity on each link and low computational comlexity. The algorithms support sender anonymity, receiver(s) anonymity, or sender-receiver anonymity.

### Summary of the invention

Accordingly, a main object of the invention is to provide a system enabling to achieve anonymous communication of messages from a number of senders to a recipient.

Another object of the invention is to provide a system fit for elections wherein the anonymity of each voter is kept for the recipient receiving the votes thanks to intermediate trustees.

The invention therefore relates to a system for achieving anonymous communication of messages from a plurality of senders to a recipient wherein a message sent by a sender is encrypted with a sender key which is obtained by combining the keys of several intermediate trustees. The intermediate trustees are arranged in a triangular matrix according to a number of k-1 columns with each column j having k+1-j trustees resulting in a total number of trustees equal to (k-1).(k+2)/2. Each trustee of column j sends a specific key to the corresponding trustee of the same row in column j-1, except the trustee of row k+1-j who sends a specific key to the corresponding trustee of the same row in column j-1 and a specific key to the trustee of row k+2-j in column j-1, whereby the sender receives a key from each trustee amongst the k trustees of column 1, the sender key being the combination of all the keys received from the trustees of the first column.

### Brief description of the drawings

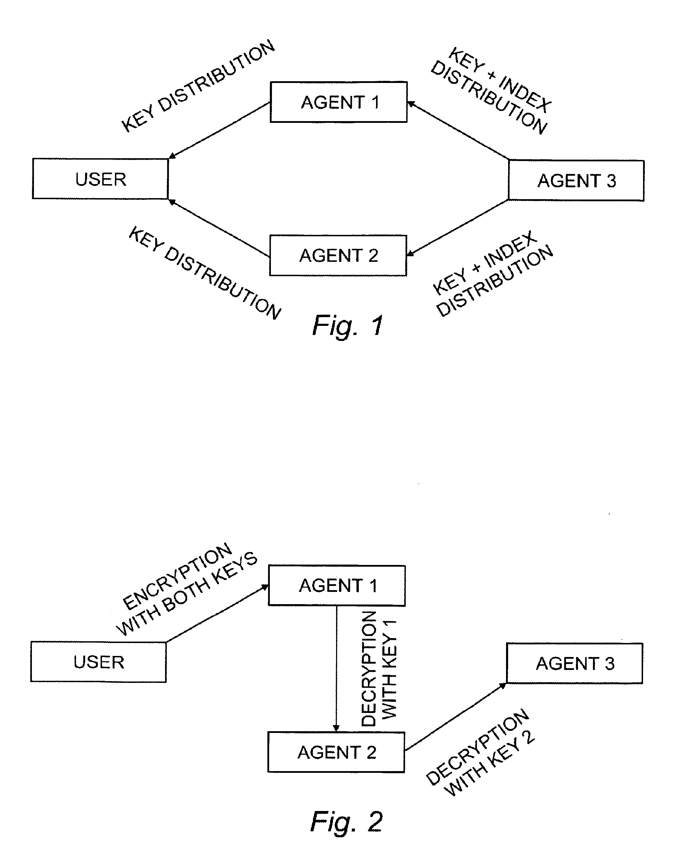

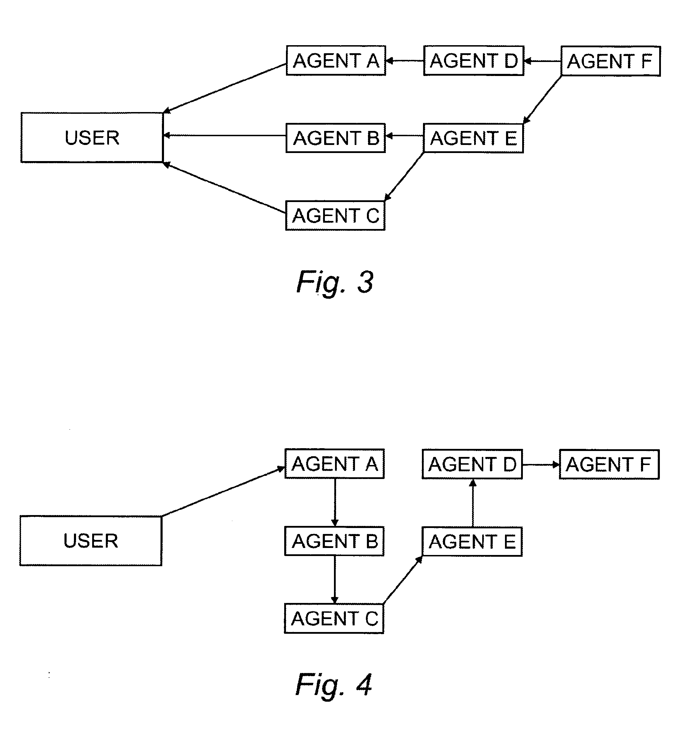

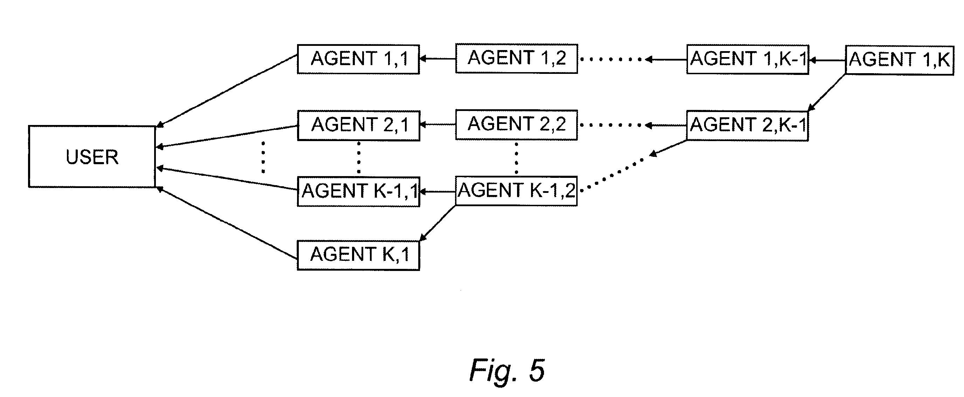

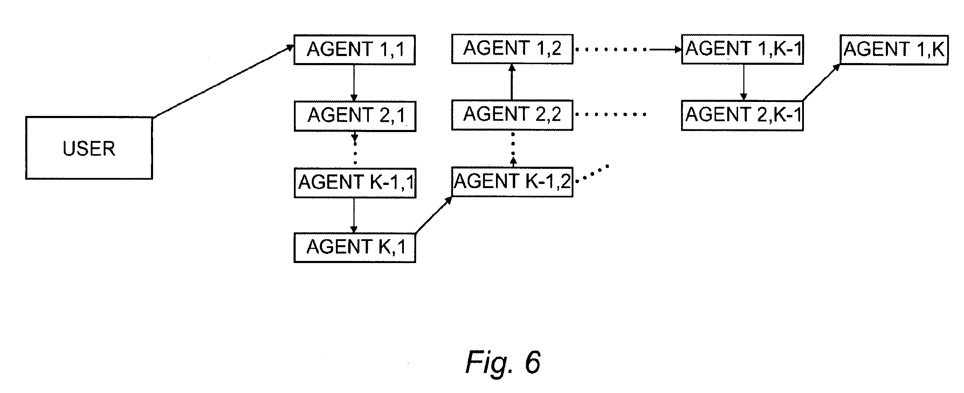

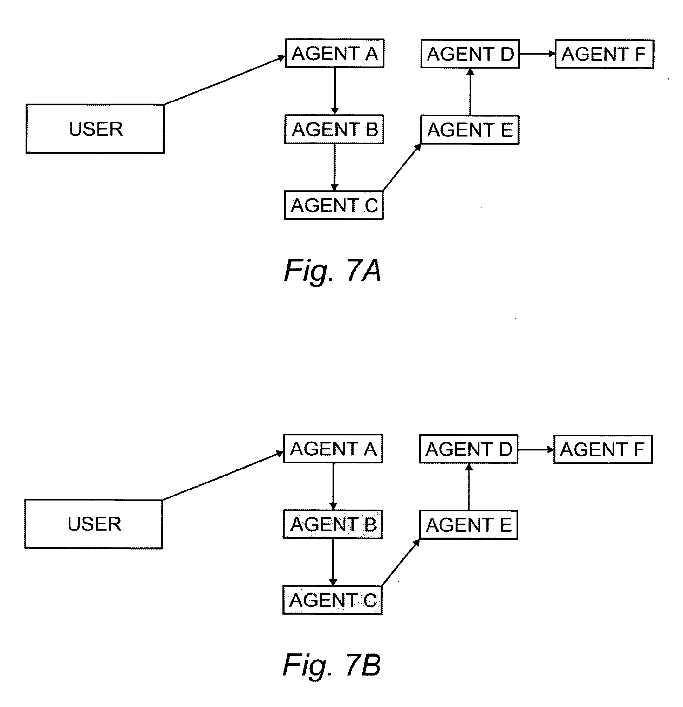

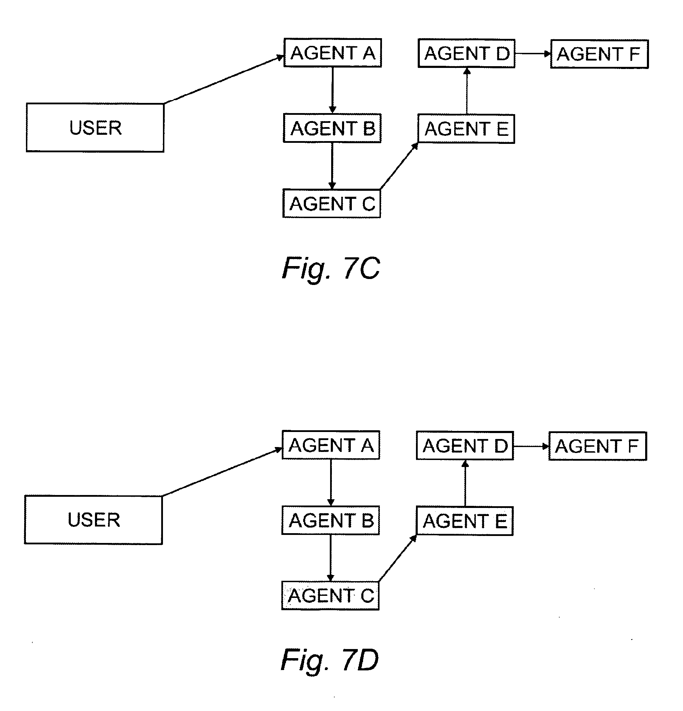

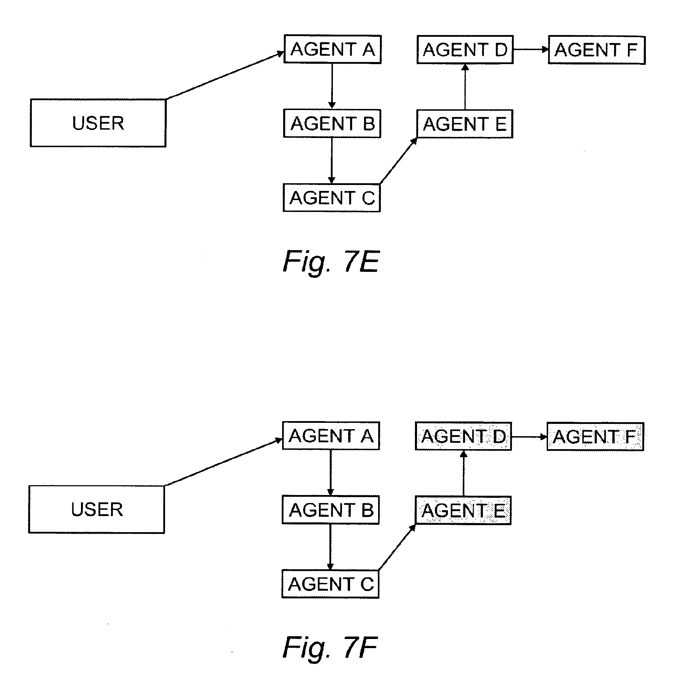

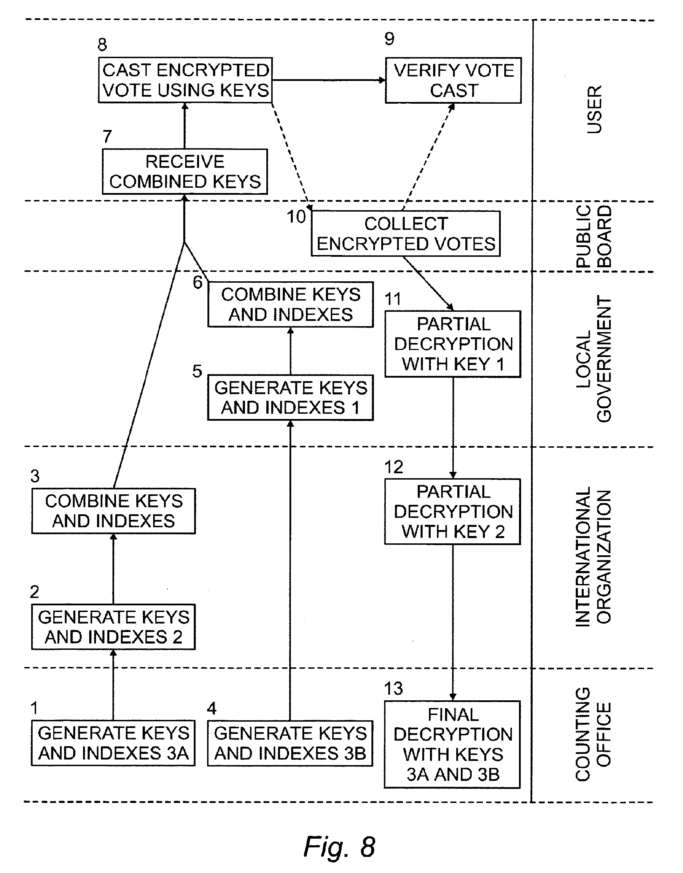

The above and other objects, features and advantages of the invention will be better understood by reading the following more particular description of the invention in conjunction with the accompanying drawings wherein:
■ Fig. 1 represents the key distribution in a system according to the invention involving three trustees;
■ Fig. 2 represents the decryption of a message in a system according to the invention involving three trustees;
■ Fig. 3 represents the key distribution in a system according to the invention involving six trustees;
■ Fig. 4 represents the decryption of a message in a system according to the invention involving six trustees;
■ Fig. 5 represents the key distribution in a system according to the invention involving k(k+1)/2 trustees arranged in a matrix according to the principles of the invention;
■ Fig. 6 represents the decryption of a message in a system involving k(k+1)/2 trustees arranged in a matrix according to the principles of the invention;
■ Fig. 7A to 7F represent the system involving six trustees wherein there is a collusion between several trustees which be detrimental in some cases (Fig. 7A, Fig. 7C and Fig. 7E) or not in other cases (Fig. 7B, Fig. 7D and Fig. 7F); and
■ Fig. 8 is a diagram illustrating the sequence of steps involved in a system with three trustees according to the invention used for general elections.

### Detailed description of the invention

The principle of the invention is to organize the trustees and the final recipient into rows and columns of trustees. The message still remains encrypted with keys from other rows or trustees so that no trustee can access the plaintext in it whereby the requirement of anonymity is met.

In the following description, the symbol "°" indicates an symmetric encryption of the first part of the expression by the key constituting the second part of the expression. In a preferred embodiment, the encryption by the key is a simple addition, digit by digit, modulo 10 which has the advantage of being commutative. In this case, the decryption is a simple subtraction modulo 10. But the invention applies in the same way to all encryptions that are commutative, for example the Xor function in the Vernam Cypher. Symmetric encryption that is not commutative (like DES & AES) could also be used, but it would require the user to encrypt his/her messages using all the symmetric keys in the right order.

### System with three trustees

As illustrated in Fig.1, agent 3 who is the recipient of the messages distributes them separately, together with the index corresponding to each key, to agent 1 and agent 2 respectively. Agent 1 and agent 2 then combine (this can be addition, digit by digit modulo 10) their own randomly generated keys with what they received from agent 3, and then send the result separately to the citizen. The agents keep their keys in a database, together with the index received from agent 3.

Now the flow is
* Agent 3 → Agent 1: Key3a, indexKey3a
* Agent 3 → Agent 2: Key3b, indexKey3b
* Agent 1 → Citizen: KeyA = Key3a°Key1
* Agent 2 → Citizen: KeyB = Key3b°Key2

It must be noted that the citizen will just receive two keys. He/she needs not even notice that each key is in fact a combination of keys coming from different agents.

The citizen encrypts his message (in the embodiment this will be a vote) with both keys.
Encrypted Vote=Vote°KeyA°KeyB = Vote°Key3a°Key1°Key3b°Key2 (equation 1.a)

The description flow is illustrated in Fig. 2. First, the citizen sends his encrypted vote see equation 1.a to agent 1. Agent 1 will apply (=subtract) on the message his key Key1 only, append the index of key3a, and send the result together with the identification of the Citizen, to agent 2. Agent 2 will apply on the message his key2 only, append the index of key3b, *delete* the identification of the citizen, and send the result to agent 3. Agent 3 will look up the keys key3a and key3b, using the indexes in the message, and then decrypt the final message.

More formally:
Citizen → agent1: Vote°Key3a°Key1°Key3b°Key2, and also citizen identification
agent1 → agent2: Vote°Key3a°Key3b°Key2, and also citizen identification, index Key3a
agent2 → agent3: Vote°Key3a°Key3b, index Key3a, index Key3b, without citizen identification.

The condition that the vote remains confidential is that only two of the three agents protect their data properly. A third agent could publish all his data. In that extreme case, confidentiality can still be protected by the other agents to the outside world.

The agents should not only be chosen for their security infrastructure, but also for their reputation of non-collusion. A way to convince the public is to place all trustees in one place, in the presence of a sufficient number of auditors and seal the used hardware or erase the data when appropriate.

### System with six trustees

Fig.3 illustrates how the keys are distributed in an example model with 6 agents. It shows a matrix consisting initially of three rows and three columns of agents, but whereby all agents with index (i, j) whereby k-j+1 is smaller than i, have been omitted. This omission was appropriate for efficiency. Example: an agent at position (k, k-1) could collude directly with the final recipient of the message ("agent" at position (1,k)); this would render all agents below agent at position (1,k) almost useless.

The explanation of Fig. 3 is analogous to the previous embodiment with three agents. The procedure is as follows:
Agent f → agent d: Key_fd, indexKey_fd.
Agent f => Agent e: Key_fe, indexKey_fe
Agent d => Agent a: Key_fd°Key_da, indexKey_da
Agent e => Agent b: Key_fe°Key_eb, indexKey_eb
Agent e => Agent c: Key_fe°Key_ec, indexKey_ec
Agent a => Citizen: KeyA = Key_fd°Key_da°Key_a
Agent b => Citizen: KeyB = Key_fe°Key_eb°Key_b
Agent c => Citizen: KeyC = Key_fe°Key_ec°Key_c
wherein
Key_xy: key that goes (or went) from agent x to agent y.
IndexKey_xy: index of Key_xy in the database of x, sent together with Key_xy to agent y.

It must be noted that the citizen receives Key_fe twice, once through agent b and once through agent c. That is why in the decryption phase we will request that each agent that received a key that afterwards was duplicated, should remove the redundant keys and send the message encrypted only once with that key, to the next agent in the column.

Fig.4 shows how a message from a citizen is decrypted in the example involving 6 trustees. The explanation is analogous to what is described under the first embodiment involving three trustees. The procedure is as follows:
Citizen → agent a: Vote°KeyA°KeyB°KeyC°, and also citizen identification
Agent a → agent b: Vote°Key_fd°Key_da°KeyB°KeyC, indexKey_da, and also citizen identification,
Agent b → agent c: Vote°Key_fd°Ke_da°Key_fe°Key_eb°KeyC, indexKey_da, indexKey_eb and also citizen identification,
Agent c → agent e: Vote°Key_fd°Key_da°Key_fe°Key_eb°Key_fe°Key_ec, indexKey_da, indexKey_eb, indexKey_ec (without citizen identification)
Agent e → agent d: Vote°Key_fd°Key_da°Key_fe, indexKey_da, indexKey_fe (warning: it was necessary for agent e to decrypt once with Key_fe. Indeed the message passed to agent e contained encryption twice with the same key Key_fe. If the agent had left this unchanged, this would have allowed agent d to learn something about the vote; the most obvious example is when addition modulo 2 (the Xor) is used as encryption. In that case, "Key_fe°Key_fe" is always zero; thus agent d would receive just "Vote°Key_fd", and, since he knows Key_fd, he would be able to decrypt the vote before it arrives at agent f).
Agent d → agent f: Vote°Key_fd°Key_fe, indexKey_fe, index_fd Agent f can look up all the keys in the expression above, and hence can decrypt the message and obtain Vote.

### System with a plurality of trustees

The general system with more than six trustees or agents is illustrated in FIG.5 wherein an agent i,j is the agent on row i and column j with 1 ≤ i, j ≤ k.

Each agent i, j with j=k (in the triangular matrix in Fig.5, there is only one such agent in the rightmost column, namely agent 1,k) will randomly generate a key, and pass it to his neighbour agent i,k-1. The bottom agent of that rightmost column (which, as already mentioned, is agent 1, k), will randomly generate another key, and pass it through agent i+1, k-1, which will in the triangular matrix be agent 2, k-1. The keys are delivered together with their indexes. Note that further to the recipient, there are a number of (k-1)(k+2)/2-intermediate trustees.

Each agent i,j with j different from 1 and from k will
1) receive the Key (i, j+1) and Index (i,j+1), from his neighbour agent i, j+1, and store the received Index (i,j+1).
2) randomly generate a new key Key*(i,j)
3)attribute an Index (i,j) to Key*(i,j) and store the index.
4) add Key*(i,j) to Key (i,j+1), and pass the resulting Key(i,j) = Key(i,j+1)°Key*(i,j) to agent i, j-1 together with the index Index(i,j) of that key.

In the triangular matrix, the bottom agent will randomly generate another key, and pass it through to agent i+1, j-1 as described in steps 2 to 4 above.
Each agent i,j with j=1 will
* perform the steps 1 to 3 above
* map the Index(i,j), which will be Index(i,2), to an identification of the citizen, or to a serial number that ultimately will be mapped to a citizen.
* add Key*(i,1) to Key(i,2), and pass the resulting Key(i,1) = Key*(i,1)°Key(i,2) to the user in a secure and authenticated way.

Fig.6 illustrates how a message is decrypted in the system with the same plurality of agents.
For the leftmost column (the entities having delivered their specific keys directly to the customer), in other words each agent i,j with j=1 will:
* use the identification of the citizen to look up Key*(i,j).
* decrypt the encrypted message with Key*(i,1) only.
* use the identification of the citizen to look up the index of the agent at column 2 that passed the key to him in the key distribution phase (mostly this will be Index(i,2)).
* append the looked up index to the message.
* pass the resulting message to the next agent in the column or, if arrived at the end of the column, delete the citizen identification and pass the resulting message to an agent in the second column.

Each agent i,j with j different from k and 1 will
* extract the Index(i,j) from the message, to look up Key*(i,j).
* decrypt the encrypted message with Key*(i,1) only.
* if and only if the agent had sent specific keys to two agents of column j-1, repeat the two steps above with the second Index(i,j) received.
* use the Index(i,j) to look up the index of the agent at the next column j+1, that passed the key to him in the key distribution phase (mostly this will be Index(i,j+1)).
* append the looked up index (for agent in column j+1) to the message.
* delete Index(i,j) from the message.
* if and only if the agent had sent specific keys to two agents of column j-1, then decrypt the message once with the key received from column j+1, in order to avoid passing messages that have been encrypted twice with the same key, as explained above.
* pass the resulting message to the next agent in the column or, if arrived at the end of the column, pass the resulting message to an agent in the next column j+1.

Each agent i,j with j=k (in the triangular matrix in Fig.6 there is only such agent, namely agent 1,k) will:
* extract Index(i,k) from the message to look up Key*(i,k).
* decrypt the encrypted message with Key*(i,k).
* if the agent had sent specific keys to two agents of column k-1 (which is definitely the case in a triangular matrix) repeat the two steps above with the other Index(i+1,k), and retrieve the plaintext message or vote.

### Trust Requirements

To be reliable, the system according to the invention, must avoid that someone be able to make the link between a plaintext message and its sender. The following indicates which collusion of agents breaks the system and which collusion is insufficient to break the system. Although, the system being used to illustrate collusions in this chapter is a system with six trustees or agents, it is clear that the principle could be extended to a system with any number of agents. In the following figures, there is collusion between the agents in grey boxes.

In Fig.7A, there is a collusion between the agents of the left most column. The agents to this leftmost column know the keys sent to the user and so, they together are able to decrypt the message and make the link to the user.

In Fig.7B, there is a collusion between all the agents but one (agents b and c) of the leftmost column. In such a case, they still lack the last key needed to decrypt the message.

In Fig.7C, there is a collusion between all but one of the leftmost agents and the agent at position 1,2 (agent d). In the leftmost column, all agents know the keys that they have received. The agent at position 1,2 knows what he has to send to agent at position 1,1. All together they can decrypt the message as follows:
agent b brings in Key_fe°Key_eb,
agent c brings in Key_fe°Key_ec,
agent d brings in Key_fd°Key_da,
Agent c sends to agent e the following information:
Vote ° Key_fe ° Key_eb ° Key_fe ° Key_ec ° Key_fd ° Key_da, so they can use what they brought in to decrypt and get Vote. On top of that, both agent b and agent c know the name of the citizen, so that they can make the link between Vote and the citizen.

In Fig.7D, there is a collusion between all but one of the leftmost entities and the entity at position (m,2) where (m,1) is the position of one of the unreliable leftmost entities. In this case, there is still a full row whose entities did not disclose any of their secrets. So, at any time, the message will remain encrypted (with respect to the unreliable parties) with either Key_fd ° Key_da or Key_da.

In FIG.7E, a complete row has been compromised. So, the link between the user and its message can simply be made via the indexes.

In Fig.7F, all agents except those of the leftmost column have been compromised. But, since neither of them knows the identity of the users, no link can be made between the messages and the users.

From the above, it is clear that the advantage of the system is the possibility to split entities between those that are in contact with and know the users on the one hand, and those that can decrypt the final message on the other hand, with the possibility to use symmetric keys and without the need to unconditionally trust (certain combinations of) entities, unless in specific and large enough combinations, described above. This makes the system also fit for "real-time" (as opposed to only batch) anonymity of messages.

### EMBODIMENT FOR GENERAL ELECTIONS

The schema for using the system according to the invention in general elections, illustrated in Fig.8, involves three steps:
- a key distribution according to the matrix described above,
- encryption and sending of the votes by the voter,
- decryption of the vote according to the matrix described above.

One requirement to guarantee the secrecy of the keys is that they be generated randomly. In order to increase confidence, several series of keys could be generated and sealed, cryptographically and/or physically. Several auditors could then jointly randomly select which one of the series will be finally sent. This series should then be kept secret, while the other series will be opened/published for verification.
Sending of the keys can be done via untappable channels like sealed paper or they can be loaded on smartcards, including JavaCards.

Sealed paper could contain appropriate coating in order to allow the user to verify that the secret key has not been disclosed yet, as is widely known. In order for a voter to avoid being able to prove this vote, several keys could be sent to him/her on a pile of loose sheets, only one of which would contain the correct key. On a separate sheet, one would indicate which of the sheets contains the correct key. All this could be sent in one or more than one sealed envelopes. Because the sheets can be shuffled at any time, it is not possible for someone to prove his/her vote (which is an advantage), unless the coercer is physically present from the moment on the sealed envelope is opened.

The voter can encrypt the vote either via one time pad or via other symmetric encryption techniques. Then, he sends his encrypted vote with authentication to the first trustee. Note that the encrypted vote may be published to allow the voter to verify that the vote arrived correctly.

The decryption can be done either by letting the messages flow through trustees put together in one place which is intensively monitored by a sufficient number of auditors. Or else, taking the example with three trustees, consider agent 1 and agent 2 to be the voting office, and define agent 3 as the counting office. The information flowing through between the agents should remain secret and integer. Means to ensure that are, among others, the use of sealed data carriers like physically sealed CD-ROMS. When the hardware is left unmonitored, it can be sealed too, in order to prevent anyone from modifying or reading the data.

In the following example, there are three agents or trustees, the counting office (agent 1), an international organisation (agent 2) and the local government (agent 3) and a public board for controlling the encrypted votes by the voters.

### Step 1:

The counting office generates randomly and secretly the keys and indexes 3a which can be used in case of 5 voters:

| Key3a | Index3a |
|---|---|
| 3 | 1 |
| 0 | 2 |
| 7 | 3 |
| 9 | 4 |
| 8 | 5 |

The counting office stores and seals this table on a non modifiable data carrier, and sends a copy to the international organization. A non modifiable data carrier can include printing on paper in a sealed format, or storing on a CD-ROM and sealing it afterwards.

### Step 2:

The international organization generates randomly and secretly on his own keys and indexes 2:

| Key2 | Index2 |
|---|---|
| 5 | 1 |
| 5 | 2 |
| 1 | 3 |
| 0 | 4 |
| 3 | 5 |

The international organisation stores and seals this table on a non modifiable data carrier.

### Step 3:

The international organization then combines a mix of his own keys to the table received (mixed or not mixed) from the counting office, as follows:

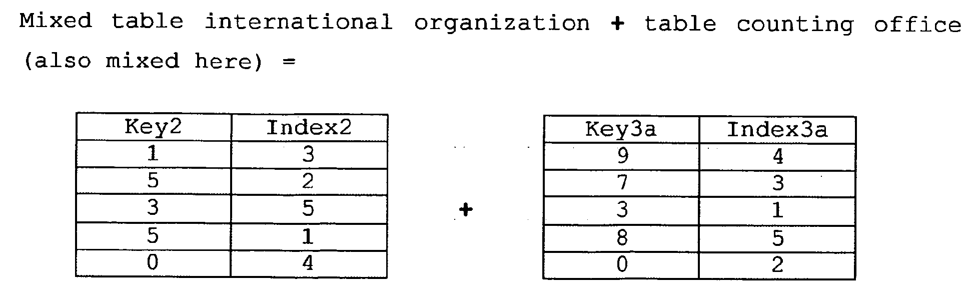

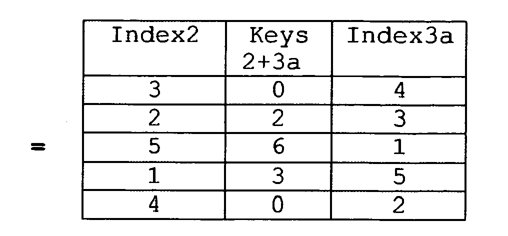

This last table will be prepended ultimately with identifications of final users, as shown in following example:

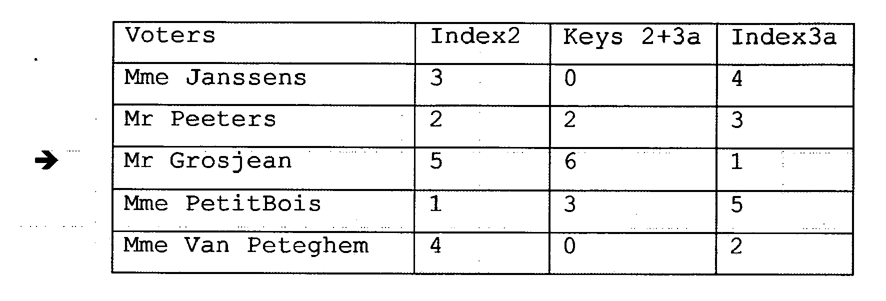

In major implementations, the indexes 2 will play the role of serial numbers, in order to cope with users that loose their key. In those implementations, the number of generated keys will be greater than the number of users; each user will be associated with a serial number. If the user looses his/her key, he/she will be associated with another serial number.

Now the keys will be sent to the users. In order to do this, the keys can for example be sent printed in a sealed and authenticated envelope, or for example a smart card can be issued with the key on it.
* Mme Janssens will get "key: 0" from the international organization.
* Mr Peeters will get "key: 2" from the international organization.
* Mr Grosjean will get "key: 6" from the international organization.
* Mme Petitbois will get "key: 3" from the international organization.
* Mme Van Peteghem will get "key: 0" from the international organization.
   From the data shown above in this step, the column Keys 2+3a may be deleted. The other data should be stored on a sealed and non modifiable data carrier.

### Step 4:

The counting office generates randomly and secretly the keys and indexes 3b:

| Key3b | Index3b |
|---|---|
| 4 | 1 |
| 1 | 2 |
| 8 | 3 |
| 2 | 4 |
| 8 | 5 |

The counting office stores this table safely and sends a copy to the local government.

### Step 5:

The local government generates randomly and secretly on his own keys and indexes 1:

| Key1 | Index1 |
|---|---|
| 4 | 3 |
| 4 | 2 |
| 1 | 1 |
| 8 | 4 |
| 7 | 5 |

### Step 6:

The local government then combines a mix of his own keys to the table received from the counting office (mixed or not mixed), as follows:

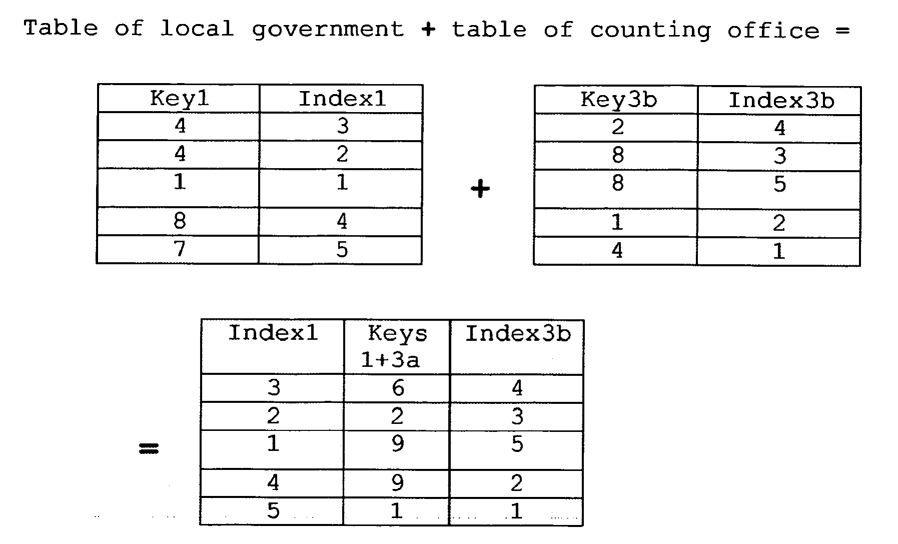

This last table will be prepared ultimately with identifications of final users, as shown in following example:

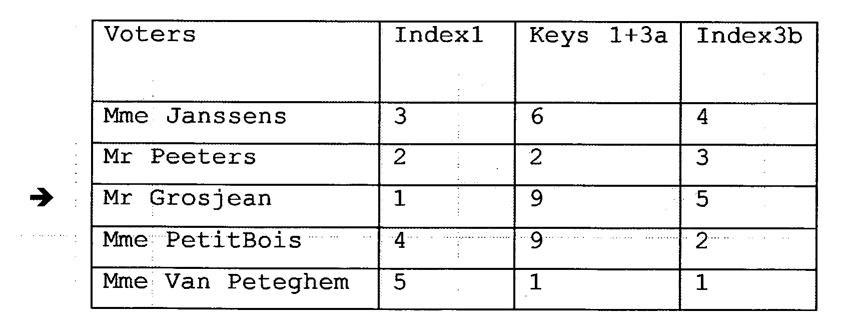

Again, the indexes Index1 can be used as serial numbers, as described above under step 3.

Now the specific keys will be sent to the users, as described above under step 2.
* Mme Janssens will get "key: 6" from the local government.
* Mr Peeters will get "key: 2" from the local government.
* Mr Grosjean will get "key: 9" from the local government.
* Mme Petitbois will get "key: 9" from the local government.
* Mme Van Peteghem will get "key: 1" from the local government.

From the data shown above in this step, the column Keys 1+3a may be deleted. The other data should be stored on a sealed and non modifiable data carrier.

### Step 7.

The user gets the keys as described at the end of step 3 and step 6. For example, Mme Janssens will have received "key=0" from the international organization, and "key=6" from the local government.

### Step 8.

The user remotely computes his/her encrypted vote.
Let's have 4 candidates:
1. Jan Jannsen
2. Peter Persen
3. Bernard Bernardsen
4. Julie Junesco

Mme Janssens, Mr Peeters and Mr Grosjean want to vote for candidate nr 2, Peter Persen. The other 2 voters for candidate nr 4, Julie Junesco.

If using a PC, Mme Janssens logs on to a webpage (containing a javascript), selects candidate nr 2, and enters the two keys she received, plus info that authenticates here. The javascript locally computes 2 (for the candidate) plus 0 (the key coming from the international organization), plus 6 (the key coming from the local government) modulo 10, which gives 8. 8 is Mme Janssens's encrypted vote, which she submits to the public bulletin board website.

Mr Peeters doesn't have access to a PC. He computes his vote manually:
2 + 2 + 2 modulo 10 = 6
Mr Peeters accesses a simple phone (Voice Response) application, authenticates (using one-time password and/or a voice print), and transmits his encrypted vote 6.

Mr Grosjean doesn't have access to a PC either. He computes his vote manually:
2 + 6 + 9 modulo 10 = 7
Mr Grosjean sends an SMS containing his User Id and a one time password, followed by the encrypted vote 7.

Mme Petitbois uses a PC to cast her vote like Mme Janssens, after authentication she submits:
4 (number of the candidate) + 3 + 9 mod 10 = 6

Mme Van Peteghem also uses a PC to cast her vote, after authentication she submits:
4 (number of the candidate) + 0 + 1 mod 10 = 5

The Voice Response system, the website and the SMS gateway all update the same public bulletin board.

### Step 9 and 10

The public bulletin board collects following votes:

| Users | Encrypted Votes |
|---|---|
| Mme Van Peteghem | 5 |
| Mme PetitBois | 6 |
| Mr Grosjean | 7 |
| Mme Janssens | 8 |
| Mr Peeters | 6 |

The citizens can verify that the encrypted vote has been listed correctly in a variety of ways: website, voice server, request by SMS. Authentication in order to verify that, is not essential here.

### Step 11

At the local government's premises, the keys 1 are looked up.

For Mme van Peteghem: index1 = 5 => key1 = 7.
5 (the encrypted vote) - 7 (the key) mod 10 = 8. 8 is the partially decrypted vote.

The local government also looks up that the Index 3b = 1 for Mme van Peteghem.
So, for Mme Van Peteghem, it will store following data:
Mme Van Peteghem, 8, Index 3b=1

Likewise, it will store following data for the other voters:
* Mme Petitbois, 8, Index 3b=2
* Mr Grosjean, 6, Index 3b=5
* Mme Janssens, 4, Index 3b=4
* Mr Peeters, 2, Index 3b=3

Result: the local government sends the data below secretly to the international organization:

| | |
|---|---|
| Mme Van Peteghem | 8, Index 3b=1 |
| Mme PetitBois | 8, Index 3b=2 |
| Mr Grosjean | 6, Index 3b=5 |
| Mme Janssens | 4, Index 3b=4 |
| Mr Peeters | 2, Index 3b=3 |

Note that the local government does not know anything about the vote intentions. Even the partially decrypted votes remain unbreakably encrypted for the local government; indeed one of the keys those partially decrypted messages remain encrypted with, are the keys 3a, which the local government never had access to.

### Step 12

At the international organization's premises, the keys 2 are looked up.

For Mme van Peteghem: index2 = 4 => key2 = 0
8 (the partially decrypted vote from the local government) - 0 mod 10 = 8. 8 is the partially decrypted vote after decryption by the international organization. Looking in it's stored tables, the international organization also found that:
Index 3a = 2
Result: the international organization will send to the counting office for Mme van Peteghem the message
8, Index 3b = 1, Index 3a = 2
without mentioning her name, and mixing the order of the messages, so that the identity of the voter cannot be deduced by looking at the row number.

The way the rows are mixed, is also stored on a non modifiable data carrier and sealed, for auditing purposes afterwards.

Here is an example of such a mix for the international organization:

| **Name** | **Old row nr** | **New row nr** |
|---|---|---|
| Mme Van Peteghem | 1 | 4 |
| Mme PetitBois | 2 | 2 |
| Mr Grosjean | 3 | 1 |
| Mme Janssens | 4 | 3 |
| Mr Peeters | 5 | 5 |

After that mix, the international organization sends to the counting office the following messages:

| |
|---|
| 3, Index 3b=5, Index 3a = 1 (from Mr Grosjean but without mentioning) |
| 3, Index 3b=2, Index 3a = 5 (from Mme Petitbois but without mentioning) |
| 3, Index 3b=4, Index 3a = 4 (from Mme Janssens but without mentioning) |
| 8, Index 3b=1, Index 3a = 2 (from Mme Van Peteghem but without mentioning) |
| 7, Index 3b=3, Index 3a = 3 (from Mr Peeters but without mentioning) |

Note that the international organization does not know anything about the vote intentions either. Even the partially decrypted votes remain unbreakably encrypted for the international organization. It knows the *index* 3b now, but not the *key* 3b itself.

### Step 13

The above messages arrive at the counting office without the names appended.

For the first message, the counting office looks up the key at Index 3b=5, which is 8. Then it looks up the key at Index 3a= 1, which is 3.
3 - 8 - 3 modulo 10 = 2
Likewise, the other messages generate:
3 - 1 - 8 modulo 10 = 4
3 - 2 - 9 modulo 10 = 2
8 - 4 - 0 modulo 10 = 4
7 - 8 - 7 modulo 10 = 2

So the vote intentions are decrypted, without anyone knowing who voted what.

Before publishing the above final results, the rows are mixed randomly again.
If for example the mixing is as follows:

| **Old row nr** | **New row nr** |
|---|---|
| 1 | 5 |
| 2 | 3 |
| 3 | 1 |
| 4 | 2 |
| 5 | 4 |

Then the above mixing table will be stored secretly and the finally released decrypted votes will be:

| **New row nr** | **Decrypted vote** |
|---|---|
| 1 | 2 |
| 2 | 4 |
| 3 | 4 |
| 4 | 2 |
| 5 | 2 |

In general, the keys, indexes and each partial decryption step, as well as the data about each mixing, is written on a non-modifiable and sealed data support, to allow auditing afterwards.

### Step 14

The above messages are counted and generate following result:
1. Jan Jannsen : 0 votes
2. Peter Persen : 3 votes
3. Bernard Bernardsen : 0 votes
4. Julie Junesco : 2 votes

Auditing can be done by choosing randomly whether to:
- reveal to auditors that have not access to data at the international organization nor at the counting office:
   - the keys Key1 and indexes stored at the local government
   - the message sent to the international organization
**or**
- reveal to auditors that have not access to data at the local government nor at the counting office:
   - the message received from the local government
   - the keys Key2 and indexes stored at the international organization
   - the mixing table of the international organizations
   - the message sent to the counting office
**or**
- reveal to auditors that have not access to data at the local government nor at the international organization
   - the message received from the international organization
   - the keys 3a and 3b and indexes stored at the counting office
   - the mixing table of the counting office
   - to compare with the final list of published decrypted votes.

## Claims

1. System for achieving anonymous communication of messages from a plurality of senders to a recipient wherein a message sent by a sender is encrypted with a sender key which is obtained by combining specific keys of the recipient and of several intermediate trustees; **characterized in that** :
- said trustees i, j with 1 ≤ i, j ≤ k are arranged according to a triangular matrix with a number of k-1 columns, k being equal or higher than 2, with each column j having k+1-j trustees resulting in a total number of intermediate trustees equal to (k-1).(k+2)/2,
- each trustee of column j comprises means adapted to send a specific key to the corresponding trustee of the same row in column j-1, except the trustee of row k+1-j who comprises means adapted to send a specific key to the corresponding trustee of the same row in column j-1 and a specific key to the trustee of row k+2-j in column j-1,
whereby said sender comprises means adapted to receive a key from each trustee amongst the k trustees of column 1, said sender key being the combination of all the keys received from the trustees of column 1.

2. System according to claim 1, wherein said specific key sent by a trustee of a column j to a trustee of a column j-1 is a combination of the key received from the trustee of column j+1 and a randomly generated key, and whereby an index is sent together with said specific key, said specific key and its corresponding index being stored in a database so that said specific key can be found out when said index is sent back to said trustee.

3. System according to claim 2, wherein said sender sends back said message to the first trustee of said first column after encrypting it with said combination of all the keys received from the trustees of said first column, said encrypted message being decrypted by said first trustee using the specific key which has been stored by said first trustee, and wherein
said message decrypted by said first trustee is sent to the second trustee of the same column who decrypts it by using the specific key which has been stored by said second trustee, said twice decrypted message being sent to the following trustee of the same column who decrypts it with his specific key and so on until the last trustee of the said first column, and wherein
said last trustee of said first column sends the partially decrypted message after decryption with his specific key to the last trustee of the last but one column and so on until the first trustee of the same column who sends the partially decrypted message, after decryption with his specific key, to the sequence of trustees in the next column and so on until the partially decrypted message is sent to said recipient who decrypts it with his specific key in order to obtain said message.

4. System according to claim 3, wherein the sender identification is sent together with the partially decrypted message by each trustee of said first column to the adjacent trustee of the same column so that each trustee can find out which specific key has been used for said sender.

5. System according to claim 4, wherein the index associated with the specific key is sent together with the partially decrypted message by each trustee of each column except said last column to the trustee of the same or adjacent column so that each trustee can find out which specific key has been used for said sender.

6. System according to any of claim 1 to 5, wherein the combination of said specific keys is an addition digit by digit modulo 10.

7. System according to claim 6, wherein the decryption of the partially decrypted message by each trustee using his specific key consists in subtracting said specific key digit by digit modulo 10 from said decrypted message.

8. System according to claim 6, being used for general elections and wherein said sender is a voter who sends a vote as a message to said recipient, whereby the anonymity of said voter is kept with respect to said recipient.

9. System according to claim 8, wherein there are two intermediate trustees who receive each a specific key from said recipient and provide said voter with a key which is a combination of said specific key received from said recipient and of their own key, the vote of said voter being encrypted with a combination of the specific keys received from said two intermediate trustees.

10. System according to claim 9, wherein one of said two intermediate trustees is an international organization and the other one is the local government representative.

## Patentansprüche

1. System zum Durchführen der Übertragung von anonymen Nachrichten von einer Vielzahl von Absendern an einen Empfänger, bei dem eine von einem Absender gesendete Nachricht mit einem Absenderschlüssel verschlüsselt wird, der durch Verknüpfen spezieller Schlüssel des Empfängers und mehrerer zwischengeschalteter Treuhänder verschlüsselt wird, wobei das System **dadurch gekennzeichnet, dass**:
- die Treuhänder i, j mit 1 ≤ i, j ≤ k in einer Dreiecksmatrix mit einer Anzahl von k-1 Spalten angeordnet sind, wobei k gleich oder größer als 2 ist und jede Spalte j k+1-j Treuhänder aufweist, sodass eine Gesamtzahl zwischengeschalteter Treuhänder gleich (k-1)·(k+2)/2 ist,
- jeder Treuhänder einer Spalte j ein Mittel umfasst, um einen speziellen Schlüssel an den entsprechenden Treuhänder derselben Zeile in der Spalte j-1 außer an den Treuhänder der Zeile k+1-j zu senden, der ein Mittel umfasst, um einen speziellen Schlüssel an den entsprechenden Treuhänder derselben Zeile in der Spalte j-1 und einen speziellen Schlüssel an den Treuhänder der Zeile k+2-j in der Spalte j-1 zu senden,
wobei der Absender ein Mittel umfasst, um von jedem Treuhänder aller k Treuhänder von Spalte 1 einen Schlüssel zu empfangen, und wobei der Absenderschlüssel gleich der Verknüpfung aller von den Treuhändern der Spalte 1 empfangenen Schlüssel ist.

2. System nach Anspruch 1, bei dem der von einem Treuhänder einer Spalte j an einen Treuhänder einer Spalte j-1 gesendete spezielle Schlüssel gleich einer Verknüpfung des vom Treuhänder der Spalte j+s empfangenen Schlüssels mit einem zufällig erzeugten Schlüssels ist und wobei zusammen mit dem speziellen Schlüssel ein Index gesendet wird, wobei der spezielle Schlüssel und sein entsprechender Index in einer Datenbank gespeichert werden, sodass der spezielle Schlüssel ermittelt werden kann, wenn der Index zum Treuhänder zurückgesendet wird.

3. System nach Anspruch 2, bei dem der Absender die Nachricht wieder an den ersten Treuhänder der ersten Spalte zurücksendet, nachdem er ihn mit der Verknüpfung aller von den Treuhändern der ersten Spalte empfangenen Schlüssel verschlüsselt hat, wobei die verschlüsselte Nachricht unter Verwendung des vom ersten Treuhänder gespeicherten speziellen Schlüssels vom ersten Treuhänder wieder entschlüsselt wird, und
bei dem die vom ersten Treuhänder entschlüsselte Nachricht an den zweiten Treuhänder derselben Spalte gesendet wird, der die Nachricht unter Verwendung des vom zweiten Treuhänder gespeicherten speziellen Schlüssels entschlüsselt, worauf die doppelt entschlüsselte Nachricht an den folgenden Treuhänder derselben Spalte gesendet wird, der die Nachricht mit seinem speziellen Schlüssel entschlüsselt und so weiter bis zum letzten Treuhänder der ersten Spalte, und
bei dem der letzte Treuhänder der ersten Spalte die teilentschlüsselte Nachricht nach der Entschlüsselung mit seinem speziellen Schlüssel an den letzten Treuhänder der vorletzten Spalte sendet, und so weiter bis zum ersten Treuhänder derselben Spalte, der die teilentschlüsselte Nachricht nach der Entschlüsselung mit seinem speziellen Schlüssel an die Folge der Treuhänder in der nächsten Spalte sendet und so weiter, bis die teilentschlüsselte Nachricht an den Empfänger gesendet wird, der sie mit seinem speziellen Schlüssel entschlüsselt, um die Nachricht zu erhalten.

4. System nach Anspruch 3, bei dem die Absenderkennung zusammen mit der teilentschlüsselten Nachricht von jedem Treuhänder der ersten Spalte an den benachbarten Treuhänder derselben Spalte gesendet wird, sodass jeder Treuhänder ermitteln kann, welcher spezielle Schlüssel für jeden Absender verwendet wurde.

5. System nach Anspruch 4, bei dem der dem speziellen Schlüssel zugeordnete spezielle Index zusammen mit der teilentschlüsselten Nachricht von jedem Treuhänder jeder Spalte außer der letzten Spalte an den Treuhänder derselben oder der benachbarten Spalte gesendet wird, sodass jeder Treuhänder ermitteln kann, welcher spezieller Schlüssel für den Absender verwendet wurde.

6. System nach einem der Ansprüche 1 bi 5, bei dem die Verknüpfung der speziellen Schlüssel gleich der Summe der Ziffern modulo 10 ist.

7. System nach Anspruch 6, bei dem die Entschlüsselung der teilentschlüsselten Nachricht durch jeden Treuhänder unter Verwendung seines speziellen Schlüssels darin besteht, den speziellen Schlüssel Ziffer für Ziffer modulo 10 von der verschlüsselten Nachricht zu subtrahieren.

8. System nach Anspruch 6, das für Parlamentswahlen verwendet wird, wobei der Absender ein Wähler ist, der eine Stimme als Nachricht an den Empfänger sendet, wobei die Anonymität des Wählers gegenüber dem Empfänger gewahrt bleibt.

9. System nach Anspruch 8, bei dem es zwei zwischengeschaltete Treuhänder gibt, die jeweils einen speziellen Schlüssel vom Empfänger empfangen und dem Wähler zur Verfügung stellen, der eine Verknüpfung des vom Empfänger empfangenen speziellen Schlüssels mit ihrem eigenen Schlüssel darstellt, wobei die Stimme des Wählers mit einer Verknüpfung der von den beiden zwischengeschalteten Treuhänder empfangenen speziellen Schlüssel verschlüsselt ist.

10. System nach Anspruch 9, bei dem eine internationale Organisation als einer der beiden zwischengeschalteten Treuhänder und der Vertreter der Kommunalverwaltung als der andere Treuhänder fungiert.

## Revendications

1. Système pour réaliser une communication anonyme de messages provenant d'une pluralité d'émetteurs à un destinataire, dans lequel un message ayant été envoyé par un émetteur est chiffré avec une clé d'émetteur, obtenue en combinant des clés spécifiques du destinataire et de plusieurs tierces de confiance intermédiaires ; **caractérisé en ce que :**
- lesdits éléments de confiance i, j, avec 1 ≤ i, j ≤ k, sont agencés selon une matrice triangulaire, ayant un nombre de k-1 colonnes, k étant égal ou supérieur à 2, chaque colonne j ayant k+1-j tierces parties de confiance, donnant un nombre totale de tierces parties de confiance intermédiaire égale à (k-1) . (k+2)/2,
- chaque tierce partie de confiance de colonne j comprend des moyens adaptés pour envoyer une clé spécifique à la tierce partie de confiance correspondante de la même ligne dans la colonne j-1, sauf la tierce partie de confiance de la ligne k+1-j, qui comprend des moyens adaptés pour envoyer une clé spécifique à la tierce partie de confiance correspondante de la même ligne dans la colonne j-1 et une clé spécifique à la tierce partie de confiance de la ligne k+2-j dans la colonne j-1,
de manière que ledit émetteur comprend des moyens adaptés pour recevoir une clé de la part de chaque tierce partie de confiance parmi les k tierces parties de confiance de la colonne 1, ladite clé d'émetteur étant la combinaison de la totalité des clés reçues de la part des tierces partie de confiance de la colonne 1.

2. Système selon la revendication 1, dans lequel ladite clé spécifique, envoyée par une tierce partie de confiance d'une colonne j à une tierce partie de confiance d'une colonne j-1, est une combinaison de la clé reçue de la tierce partie de confiance de la colonne j+1 et d'une clé générée de façon aléatoire, et de manière qu'un indice soit envoyé conjointement avec ladite clé spécifique, ladite clé spécifique et son indice correspond étant stockés dans une base de données, de manière que ladite clé spécifique puisse être trouvée lorsque ledit indice est renvoyé à ladite tierce partie de confiance.

3. Système selon la revendication 2, dans lequel ledit émetteur retourne ledit message à la première tierce partie de confiance de ladite première colonne après chiffrement de celle-ci avec ladite combinaison de la totalité des clés ayant été reçues des tierces parties de confiance de ladite première colonne, ledit message chiffré étant déchiffré par ladite première tierce partie de confiance, en utilisant la clé spécifique ayant été stockée par ladite première tierce partie de confiance, et dans lequel
ledit message, chiffré par ladite première tierce partie de confiance, est envoyé à la deuxième tierce partie de confiance de la même colonne, qui le déchiffre en utilisant la clé spécifique qui a été stockée par ladite deuxième tierce partie de confiance, ledit message deux fois déchiffré étant envoyé à la tierce partie de confiance suivante de la même colonne, qui le déchiffre avec sa clé spécifique et ainsi de suite, jusqu'à la dernière tierce partie de confiance de ladite première colonne, et dans lequel
ladite dernière tierce partie de confiance de ladite première colonne envoie le message partiellement déchiffré, après déchiffrement avec sa clé spécifique, à la dernière tierce partie de confiance de la toute dernière colonne et ainsi de suite, jusqu'à la première tierce partie de confiance de la même colonne, qui envoie le message partiellement déchiffré, après déchiffrement avec sa clé spécifique, à la séquence de tierce partie de confiance dans la colonne suivante, et ainsi de suite jusqu'à ce que le message partiellement déchiffré soit envoyé audit destinataire, qui le déchiffre avec sa clé spécifique afin d'obtenir ledit message.

4. Système selon la revendication 3, dans lequel l'identification d'émetteur est envoyé, conjointement avec le message partiellement déchiffré par chaque tierce partie de confiance de ladite première colonne, à la tierce partie de confiance adjacente de la même colonne, de manière que chaque tierce partie de confiance puisse trouver quelle clé spécifique a été utilisée pour ledit émetteur.

5. Système selon la revendication 4, dans lequel l'indice associé à la clé spécifique est envoyé, conjointement avec le message partiellement déchiffré par chaque tierce partie de confiance de chaque colonne, sauf ladite dernière colonne, à ladite tierce partie de confiance de la même colonne ou d'une colonne adjacente, de manière que chaque tierce partie de confiance puisse trouver quelle clé spécifique peut être utilisée pour ledit émetteur.

6. Système selon l'une quelconque des revendications 1 à 5, dans lequel la combinaison desdites clés spécifiques est une addition chiffre par chiffre, modulo 10.

7. Système selon la revendication 6, dans lequel le déchiffrement du message, partiellement déchiffré par chaque tierce partie de confiance en utilisant sa clé spécifique, consiste à soustraire ladite clé spécifique, chiffre par chiffre, modulo 10, dudit message déchiffré.

8. Système selon la revendication 6, utilisé pour des élections générales, et dans lequel ledit émetteur est un votant envoyant un vote en tant que message audit destinataire, de manière que l'anonymat dudit votant soit conservé par rapport audit destinataire.

9. Système selon la revendication 8, dans lequel sont prévues deux tierces parties de confiance intermédiaires, qui reçoivent chacune une clé spécifique de la part dudit destinataire et fournissent audit votant une clé, qui est une combinaison de ladite clé spécifique reçue dudit destinataire et de leur propre clé, le vote dudit votant étant chiffré avec une combinaison des clés spécifiques reçues desdites deux tierces parties de confiance intermédiaires.

10. Système selon la revendication 9, dans lequel l'une desdites deux tierces parties de confiance intermédiaire est une organisation internationale, et l'autre est le représentant du gouvernement local.
